# EUROPEAN PATENT APPLICATION

(11) **EP 4 663 579 A1**
(43) Date of publication of application: **17.12.2025**
(21) Application number: 24187239.9
(22) Date of filing: 08.07.2024
(51) Int. Cl.: B65G 1/04, B65G 1/137

(54) **AN AUTOMATED GUIDED VEHICLE FOR AUTOMATED STORAGE AND RETRIEVAL SYSTEM**

(30) Priority: 13.06.2024 IN 202421045601
(71) Applicant: Griffyn Robotech Pvt. Ltd., Maharashtra 411019 (IN)
(72) Inventor: Mahajan, Amit Anil, Cumming, 30041 (US); Gorlewar, Sachinkumar, 412105 Pune (IN)
(74) Representative: Potter Clarkson

(57) **Abstract**

An automated guided vehicle, AGV, (100) for moving around in an automated storage and retrieval system, ASRS, (200). The AGV (200) comprising: a first bin holder (40), for receiving a storage bin; a second bin holder (41), for receiving a storage bin; a bin transfer mechanism (42), which is configured to: i) transfer a storage bin between a storage rack and the first bin holder (40); and ii) transfer a storage bin between the first bin holder (40) and the second bin holder (41); and a robot (22) that is configured to: identify assets that are in a storage bin in the first bin holder (40) and identify assets that are in a storage bin in the second bin holder (41); and move assets between a storage bin that is in the first bin holder (40) and a storage bin that is in the second bin holder (41).

## Description

### FIELD OF THE INVENTION

The present invention generally relates to logistics operations and more particularly relates to an automated guided vehicle for an automated storage and retrieval system for transferring assets such as mobile phones, tablets etc. in a warehouse.

### BACKGROUND OF THE INVENTION

In warehouses, efficient picking and sorting of assets like mobile phones and tablets are essential for providing faster and better service. During these operations, assets are identified by codes with unique numbers, such as IMEI numbers for mobile phones, before being stored. Labeling these codes directly on the assets or their pouches simplifies identification and retrieval, streamlining the process. At present, these processes are either manual or semi-automated, resulting in time-consuming procedures prone to errors. Bulk packaging complicates the storage and retrieval of individual assets, leaving warehouse workers with no option but to manually select the required items. This manual approach adds complexity which further increases the risk of errors.

A warehouse management system disclosed in CN116280850B, completely replaces the manual sorting of goods, thus, greatly reduces labor cost. The system comprises a warehouse management module, an equipment control module, a digital picking module and an automatic navigation vehicle. The navigation vehicle is provided with a visual recognition system and is configured to navigate itself to a designated goods collecting area, scanning a two-dimensional code correcting posture of the feeding table, clamping a material taking box from a pack basket, and pushing the feeding table. In the system, a long-distance and multi-frequency sorting work is performed by the automatic navigation vehicle, so that the working efficiency is greatly improved. The technology solves the issues associated with the large walking distance, requirement of large number of sorting personnel and the low efficiency of manual process. However, the sorting is done at bin level as bin is used to store only one cargo and the guided vehicle picks the bin and take it to sorting/seeding person. This may reduce the walking distance of the operator, but more human involvement is necessary.

Accordingly, there exists a need to provide an automated storage and retrieval system for assets that would eliminate the deficiencies of the conventional techniques, such as reduced manual efforts in picking and delivering assets, eliminating the errors in delivering wrong goods to the end customer, and commercial loss due to inventory mismatch.

### OBJECTS OF THE INVENTION

An objective of the present invention is to eliminate manual errors and provide improved productivity of a warehouse for storing and retrieving returned assets such as mobile phones and tablets like assets.

Another objective of the present invention is to provide an automated storage and retrieval method for returned assets such as mobile phones and tablets.

Yet, another objective of the present invention is to provide a smart automated placing and picking of assets from the storage racks.

Yet, another objective of the present invention is to store the assets with identity visible and label each asset in the retrieval storage bin in a systematic way, thus eliminate difficulty in identifying the asset in the retrieval storage bin.

Yet, another objective of the present invention is to eliminate chances of mistakes in pick and place the assets.

Yet, another objective of the present invention is to enhance the process of cycle counting in storage areas, thereby eliminating inventory discrepancies.

### SUMMARY OF THE INVENTION

The present disclosure provides an automated guided vehicle (AGV) for automated storage and retrieval system (ASRS) that transfers assets from one location to another without any manual intervention.

The AGV comprises a controller formed by a plurality of programmable logic circuits configured with an AI module; a navigation module formed by a plurality of sensors, a plurality of driving wheels and a navigation application module; a cradle unit includes a rotating mechanical structure holding an image sensor, a code scanning unit, and the fork mechanism; a robot formed by a robotic arm, and an end effector in communication with a processing unit. The fork mechanism is incorporated with a telescopic fork in communication with the controller;

The controller is configured to be in communication with the navigation module, the cradle unit, and the robot. The controller is configured to trigger the navigation module to pass through predetermined routes through a plurality of rows and columns of storage racks in the ASRS, allow the cradle unit to identify storage racks and storage bins therein, and trigger the robot to identify and fetch the required asset from the storage bin and transfer the assets between the storage racks and bin holders/ conveyors/ and robot stations.

The AGV further includes a plurality of bin holders firmly fitted on a vehicle frame structure, wherein each of the plurality of bin holders is mechanically in communication with the cradle unit for receiving at least one storage bin thereon for the transfer of assets from one storage bin to another.

According to an aspect of the present disclosure, there is provided an automated guided vehicle, AGV, for moving around in an automated storage and retrieval system, ASRS, wherein the ASRS includes a storage rack column assembly that comprises a plurality of storage racks for storing individual assets in storage bins, the AGV comprising:
a first bin holder, for receiving a storage bin;
a second bin holder, for receiving a storage bin;
a bin transfer mechanism, which is configured to: i) transfer a storage bin between a storage rack and the first bin holder; and ii) transfer a storage bin between the first bin holder and the second bin holder, wherein the bin transfer mechanism comprises:
   extendable forks, which are movable between an extended configuration and a retracted configuration;
   a cradle unit, which is configured to move the extendable forks between a first orientation and a second orientation, wherein:
      when the extendable forks are in the first orientation, they are configured to move a storage bin between: i) the first bin holder when the extendable forks are in the retracted configuration; and ii) a storage rack when the extendable forks are in an extended configuration; and
      when the extendable forks are in the second orientation, they are configured to move a storage bin between: i) the first bin holder when the extendable forks are in the retracted configuration; and ii) the second bin holder when the extendable forks are in the extended configuration; and
a robot that is configured to:
   identify assets that are in a storage bin in the first bin holder and identify assets that are in a storage bin in the second bin holder; and
   move assets between a storage bin that is in the first bin holder and a storage bin that is in the second bin holder.

The bin transfer mechanism may be configured to move the cradle unit vertically such that the first bin holder can be aligned with storage racks at different heights.

The AGV may further comprise one or more buffer bin holders. The bin transfer mechanism may be further configured to transfer a storage bin between: i) the first bin holder; and ii) the one or more buffer bin holders.

The one or more buffer bin holders may be vertically offset from the second bin holder.

The bin transfer mechanism may be configured to move the cradle unit vertically such that the first bin holder can be aligned with either: i) the second bin holder; or ii) the one or more buffer bin holders.

The AGV may further comprise a navigation module which is configured to determine a route through the ASRS to a selected asset in a selected storage bin in a selected storage rack.

The navigation module may be configured to apply an artificial intelligence algorithm in determining the route through the ASRS in order to avoid obstacles in the ASRS.

The AGV may further comprise a controller that is configured to operate the bin transfer mechanism and the robot in order to move a selected asset between a first selected storage bin that is in the first bin holder and a second selected storage bin that is in the second bin holder.

The controller may be configured to apply an artificial intelligence algorithm in one or more of:
identifying assets that are in a storage bin in the first bin holder; and
identifying assets that are in a storage bin in the second bin holder.

The bin transfer mechanism may be configured to rotate the extendable forks between: the first orientation, in which the extendable forks are configured to extend in a direction that is transverse to a longitudinal dimension of the AGV; and the second orientation, in which the extendable forks are configured to extend in a direction that is substantially parallel to the longitudinal dimension of the AGV.

The first bin holder and the second bin holder may be offset from each other in a direction that is parallel to a longitudinal dimension of the AGV.

The extendable forks may be telescopic.

There is also disclosed an automated guided vehicle (AGV) for automated storage and retrieval system (ASRS), the ASRS includes a storage rack column assembly consists of a plurality of storage racks forms a storage space for storing the individual assets, the AGV comprising:
a controller formed by a plurality of programmable logic circuits configured with an AI module;
a navigation module in communication with the controller, the navigation module includes a plurality of sensors, a plurality of driving wheels and a navigation application module;
a fork mechanism incorporated with a telescopic fork in communication with the controller;
a cradle unit in communication with the controller, the cradle unit includes a rotating mechanical structure holding an image sensor, a code scanning unit, and the fork mechanism;
a plurality of bin holders firmly fitted on a vehicle frame structure, each of the plurality of bin holders in communication with the cradle unit receives at least one storage bin therein; and
a robot in communication with the controller, the robot includes a robotic arm, and an end effector in communication with a processing unit;
wherein the controller is configured to trigger the navigation module to pass through predetermined routes through a plurality of rows and columns of storage racks, allow the cradle unit to identify storage racks and fetch storage bins therein, and trigger the robot to identify and pick the required asset from the storage bin and transfer the assets from one location to another.

The controller may include programable logic controllers (PLCs) and/or computers (PCs).

The plurality of driving wheels may include two powered differential driving wheels and four caster wheels.

The plurality of driving wheels may be configured to enable the navigation module to execute precise movements, including forward and backward motion, as well as rotational adjustments.

Caster wheels may be positioned to provide stability and support for the AGV when it encounters uneven surfaces or obstacles along the path.

The navigation application module may be configured to incorporate predefined routes for mapping out the ASRS environment, calibrate the sensors and associated circuits to detect and respond to obstacles in the path and other conditions.

The plurality of sensors may include a safety sensor configured to detect obstacles within the path laid by the navigation application.

The safety sensor may be a Lidar-sensor module employing Lidar technology, that emits laser beams and measures the reflections to create detailed maps of the surrounding area.

The fork mechanism may include fingers / prongs that securely grip the storage bins, facilitating transportation of storage bins between the bin holders and storage racks/ conveyors/ and robot stations.

The cradle unit may be rotatably positioned atop a linear actuator.

The cradle unit may be configured to rotate up to 270 degrees.

The cradle unit may be mounted on a vertical actuator configured to move the cradle unit up and down such that cradle has the access to all the levels in the storage racks.

The image sensor in the cradle unit may be a laser sensor configured to detect empty space in the storage rack before loading the storage bins onto the storage racks.

The code scanning unit in the cradle unit may be designed to read and interpret the location information encoded on both the storage rack and the storage bin.

The code scanning unit may be a camera configured to scan the QR codes.

The plurality of bin holders may be arranged vertically one below the other for receiving buffer storage bins fetched by the fork mechanism.

The robot may be mounted on a vehicle frame structure in an inverted position facing the storage bin.

The end effector may include a vision module and a gripper in communication with the processing unit, wherein the processing unit orchestrates the movements and actions of the gripper by identifying unique identification code on the pouched asset by the vision module and sort the assets in the storage bin.

The vision module may include a camera that is configured for capturing images of the storage bin and an image processing module configured within the processing unit.

The vision module may be configured to capture images of the entire storage bin from directly above, process the images, and identify the assets in the storage bin based on the unique identification codes printed on the pouches.

The AI module may include a deep learning (DL) inferencing model configured to identify the presence of the unique identification code in the images captured by the robot.

### BRIEF DESCRIPTION OF THE DRAWINGS

The objects and advantages of the present invention will become apparent when the disclosure is read in conjunction with the following figures, wherein
Figure 1 illustrates a pictorial view of an automated storage and retrieval system containing a plurality of storage racks and an automated guided vehicle for transferring assets stored in the storage racks, in accordance with an embodiment of the present invention;
Figure 2 illustrates a perspective view of the automated guided vehicle in accordance with an embodiment of the present invention;
Figure 3A illustrates a pictorial view of the automated guided vehicle in figure 2 with a telescopic fork in a retracted position in accordance with an embodiment of the present invention;
Figure 3B illustrates a pictorial view of the automated guided vehicle in figure 2 with a telescopic fork in an extended position in accordance with an embodiment of the present invention;
Figure 4A illustrates a perspective view of a robot incorporated with the automated guided vehicle in accordance with an embodiment of the present invention;
Figure 4B illustrates a pictorial view of a gripper for the robot of figure 4A in an automated guided vehicle in accordance with an embodiment of the present invention;
Figure 5 illustrates a pictorial view of the automated guided vehicle with vision module ON in accordance with an embodiment of the present invention;
Figure 6A illustrates a pictorial view of the storage bin with partition for arranging the assets in accordance with an embodiment of the present invention;
Figure 6B illustrates a pictorial view of the storage bin with pouched assets arranged in accordance with an embodiment of the present invention;
Figure 6C illustrates an exploded view of the storage bin of figure 6A in accordance with an embodiment of the present invention; and
Figure 7 illustrates a flow diagram of a method for automated storage and retrieval of assets in accordance with an implementation of an embodiment of the present invention.

### DETAILED DESCRIPTION OF THE INVENTION

The foregoing objects of the present invention are accomplished and the problems and shortcomings associated with the prior art, techniques, and approaches are overcome by the present invention as described below in the preferred embodiments.

The present invention provides an automated guided vehicle for automated storage and retrieval system facilitating asset transfer in a warehouse. The system comprises a plurality of storage racks and an automated guided vehicle (AGV) employed within warehouses for the efficient transfer of materials from one location to another. The AGV navigates along predefined routes through the storage racks and possesses the capability to detect and circumvent obstacles in its path.

In the following description, for the purpose of explanation, specific details are set forth in order to provide an understanding of the present invention. It will be apparent, however, to one skilled in the art that the present invention may be practiced without these details. One skilled in the art will recognize that embodiments of the present invention, some of which are described below, may be incorporated into a number of systems.

Furthermore, connections between components and/or modules within the figures are not intended to be limited to direct connections. Rather, these components and modules may be modified, re-formatted or otherwise changed by intermediary components and modules.

Throughout this application, with respect to all reasonable derivatives of such terms, and unless otherwise specified (and/or unless the particular context clearly dictates otherwise), each usage of:
"a" or "an" is meant to read as "at least one."
"the" is meant to be read as "the at least one."
References in the present invention to "one embodiment" or "an embodiment" mean that a particular feature, structure, characteristic, or function described in connection with the embodiment is included in at least one embodiment of the invention. The appearances of the phrase "in one embodiment" in various places in the specification are not necessarily all referring to the same embodiment.

Embodiments of the present invention include various steps, which will be described below. The steps may be performed by hardware components and may be embodied in machine-executable instructions, which may be used to cause a general-purpose or special purpose processor programmed with the instructions to perform the steps. Alternatively, steps may be performed by a combination of hardware, software, firmware and/or by human operators.

Various methods described herein may be practiced by combining one or more machine-readable storage media containing the code according to the present invention with appropriate standard computer hardware to execute the code contained therein.

If the specification states a component or feature "may' can", "could", or "might" be included or have a characteristic, that particular component or feature is not required to be included or have the characteristic.

As used in the description herein and throughout the claims that follow, the meaning of "a, an," and "the" includes plural reference unless the context clearly dictates otherwise. Also, as used in the description herein, the meaning of "in" includes "in" and "on" unless the context clearly dictates otherwise.

Exemplary embodiments will now be described more fully hereinafter with reference to the accompanying drawings, in which exemplary embodiments are shown. This invention may, however, be embodied in many different forms and should not be construed as limited to the embodiments set forth herein. These embodiments are provided so that this invention will be thorough and complete and will fully convey the scope of the invention to those of ordinary skill in the art. Moreover, all statements herein reciting embodiments of the invention, as well as specific examples thereof, are intended to encompass both structural and functional equivalents thereof. Additionally, it is intended that such equivalents include both currently known equivalents as well as equivalents developed in the future (i.e., any elements developed that perform the same function, regardless of structure).

Hereinafter, embodiments will be described in detail. For clarity of the description, known constructions and functions will be omitted. While embodiments of the present invention have been illustrated and described, it will be clear that the invention is not limited to these embodiments only. Numerous modifications, changes, variations, substitutions, and equivalents will be apparent to those skilled in the art, without departing from the spirit and scope of the invention, as described in the claim.

The present invention is illustrated with reference to the accompanying drawings, throughout which reference numbers indicate corresponding parts in the various figures. These reference numbers are shown in brackets in the following description.

In an aspect of the present disclosure, an automated guided vehicle for automated storage and retrieval system for the transfer of assets, particularly, for the storage and retrieval of assets is disclosed. The automated storage and retrieval system comprises of a plurality of storage rack column assembly as storage locations and the automated guided vehicle (AGV) is capable of moving along predetermined routes within the storage racks. The AGV is equipped with the capability to detect obstacles in its path and navigate autonomously. The AGV is employed within warehouses for the efficient transfer of items such as products, goods, merchandise, or materials being stored in the warehouse from one location to another.

As will be discussed below, the AGV can comprise a plurality of bin holders, a combination of controllers ("controller" hereinafter) in communication with a navigation module, a fork mechanism, a cradle unit, and a robot. The controller can be formed by a plurality of programmable logic controllers (PLCs) and/or computers (PCs); the navigation module can include a plurality of sensors, a plurality of driving wheels and a navigation application module configured within the controller; the fork mechanism can be incorporated with a telescopic fork in communication with the controller; the cradle unit can have an image sensor and a code scanning unit in communication with the controller, the plurality of bin holders can be firmly fitted on a vehicle frame structure, each of the plurality of bin holders can receive at least one storage bin therein; and a robot mounted on the vehicle frame structure can face the storage bin. The vehicle frame structure can be composed of interconnected elements that work together to hold the individual components, support loads and provide structural integrity.

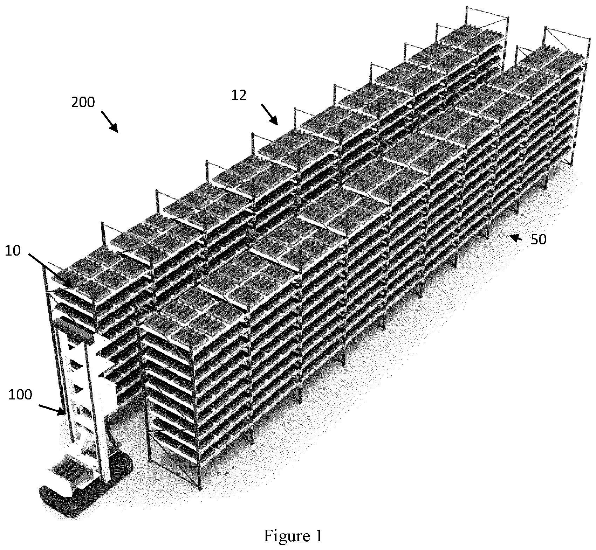

Referring to the figure 1, an automated storage and retrieval system (200) comprises of a storage rack column assembly (50) containing a plurality of storage racks. Figure 1 also shows an automated guided vehicle for moving around in the automated storage and retrieval system (200) so that it can transfer assets such as mobile phones and tablets, stored in the storage racks in a warehouse. The storage rack column assembly (50) consists of a plurality of storage racks (10) enclosed by a structure assembly (12), which forms a plurality of storage spaces for storing the individual assets (20). The individual rows are identified by a unique code or barcode that can be mapped to a unique identification code (29) of the stored asset (20) provided for the retrieval process. The AVG (100) is an automated device capable of retrieving/placing assets (20) to/from each of the plurality of storage racks (10). The storage racks (10) are designed to accommodate a plurality of proximity sensors coupled to a central controller (not shown), that are configured for monitoring the position of the storage rack (10). Each of the storage racks (10) in the storage rack column assembly (50) is designed in such a way that it can be easily integrated into an automation line or with a robotic arm (27) of the AVG (100). This can be achieved by an AI based central controller that calibrates along with physical mastering for every storage rack (10) during the initial installation and docking of the storage rack (10). The structure assembly represents a mechanical strengthening member that provides support to the plurality of storage racks (10). In the embodiment, the storage rack column assembly (50) is configured within the structure assembly (12) having a mechanical strengthening member to hold the storage racks for providing support thereto.

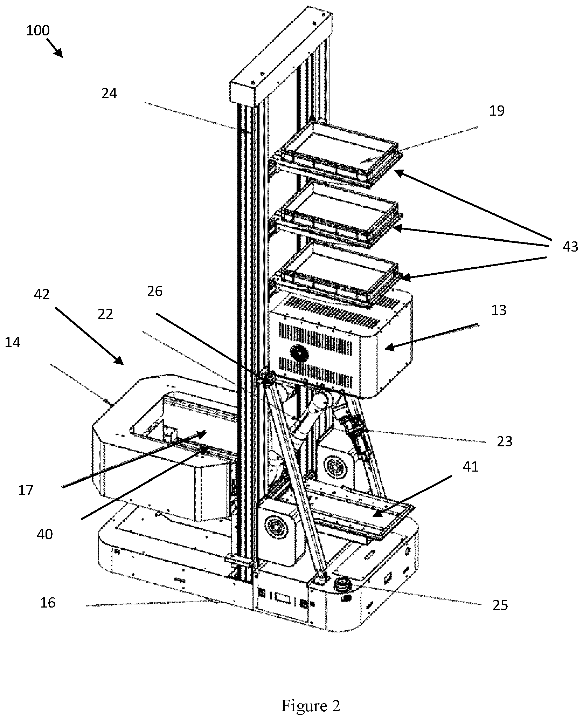

Referring to the figure 2, an AGV (100) in accordance with one of the exemplary embodiments of the present invention is illustrated.

The AGV (100) has a first bin holder (40) and a second bin holder (41). The first and second bin holders (40, 41) are for receiving a storage bin, as will be discussed below. Any of the bin holders that are described herein may simply be a plate or any other structure that is suitable for supporting a storage bin. In some examples, a bin holder may have one or more indentations or protrusions in order to retain a storage bin in the correct position when it is located in the bin holder.

The AGV (100) also includes a bin transfer mechanism (42), which is configured to transfer a storage bin between a storage rack (10) and the first bin holder (40). In this way, the bin transfer mechanism (42) can retrieve a storage bin from a storage rack and locate the storage bin in the AGV (100) for further processing. Also, the bin transfer mechanism (42) can return a storage bin to a storage rack from the AGV (100) after the storage bin has been processed. That is, after an asset has been removed from the storage bin or after an asset has inserted into the storage bin.

The bin transfer mechanism is also configured to transfer a storage bin between the first bin holder (40) and the second bin holder (41). In this way, a storage bin that has been retrieved from a storage rack and placed in the first bin holder (40), can be moved on from the first bin holder (40) to the second bin holder (41). Then, when the first bin holder (40) is empty, another storage bin can be retrieved from a storage rack and located in the first bin holder (40). As will be discussed below, the AGV (100) can then transfer assets between the storage bin in the first bin holder (40) and the storage bin in the second bin holder (41). In one example, the assets are mobile phones that are moved between storage bins such that mobile phones with similar characteristics (such as manufacturer, model, condition, memory) can be sorted so that they are located in the same storage bin. This automated sorting of assets can be an especially significant advantage in applications where there are a large number of assets. For example, warehouses are known to store many, many thousands of second-hand mobile phones. It can be unfeasible for such a large number of assets to be accurately and efficiently sorted manually.

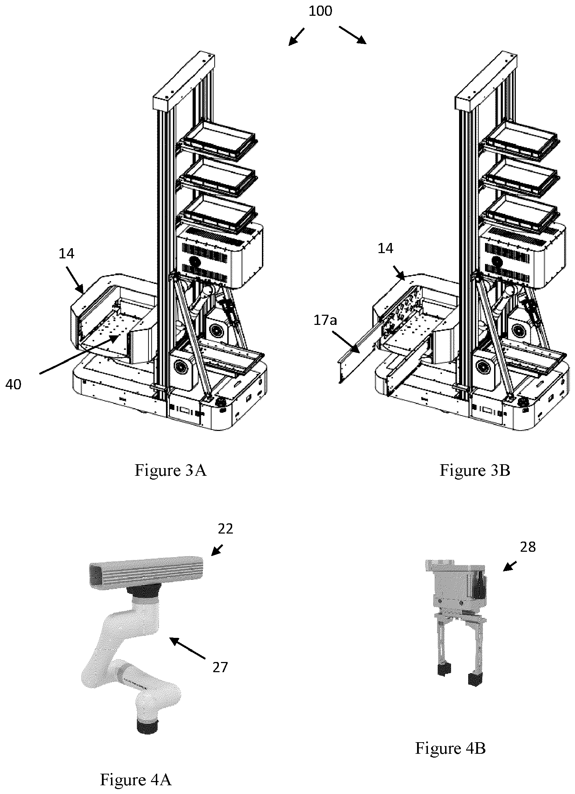

In this example, the bin transfer mechanism (42) includes a fork mechanism (17) and a cradle unit (14). The fork mechanism (17) includes a pair of extendable forks (17a). The extendable forks are movable between a retracted configuration and an extended configuration. The retracted configuration is shown in Figure 3A, and the extended configuration is shown in Figure 3B. The extendable forks (17a) in this example can selectively grip a storage bin such that the storage bin can be moved between bin holders. For example, the extendable forks (17a) can be moved closer together when they are either side of a storage bin such that they grip the storage bin. Then, when the extendable forks move between the retracted configuration and the extended configuration they take the storage bin with them. Similarly, the extendable forks (17a) can be disengaged from a storage bin by moving the extendable forks (17a) away from each other such that when the extendable forks move between the retracted configuration and the extended configuration, they leave the storage bin where it was.

The cradle unit (14) can move the extendable forks (17a) between a first orientation (that is shown in figures 3A and 3B) and a second orientation (that is shown in figure 2).

When the extendable forks (17a) are in the first orientation (that is shown in figures 3A and 3B), they can move a storage bin between: i) the first bin holder (40) when the extendable forks are in the retracted configuration (as shown in figure 3A); and ii) a storage rack when the extendable forks are in an extended configuration (as shown in figure 3B).

When the extendable forks (17a) are in the second orientation (as shown in figure 2), they are configured to move a storage bin between: i) the first bin holder (40) when the extendable forks are in the retracted configuration (as shown in figure 2); and ii) the second bin holder (41) when the extendable forks are in the extended configuration (not shown in the figures).

In this example, as can be seen from the drawings, the bin transfer mechanism (42) rotates the cradle unit (14), and hence also rotates extendable forks (17a) between the first orientation and the second orientation. When the extendable forks (17a) are in the first orientation, they can extend in a direction that is transverse to a longitudinal dimension of the AGV (100). In figures 3A and 3B the longitudinal dimension of the AGV (100) is generally from left to right, such that the extendable forks (17a) can extend in a direction that is generally in and out of the page. In this way, the AGV (100) can travel between rows of racking and it can reach out to its side to retrieve or replace a storage bin from or to the racking. Beneficially, the AGV (100) does not have to be steered such that it is directly facing the racking from which it is to retrieve or replace a storage bin, which could be racking on either side of the AGV (100).

When the extendable forks (17a) are in the second orientation, the extendable forks (17a) can extend in a direction that is substantially parallel to the longitudinal dimension of the AGV (100). That is, in a direction that is generally left to right in figure 2. Correspondingly, the first bin holder (40) and the second bin holder (41) are offset from each other in a direction that is parallel to the longitudinal dimension of the AGV (100).

The AGV (100) also includes a robot (22). The robot (22) can identify assets that are in a storage bin in the first bin holder (40) and also identify assets that are in a storage bin in the second bin holder (41). As will be discussed in detail below, in one example the robot (22) has a camera that scan codes on the assets to identify them. The robot (22) can also move assets between a storage bin that is in the first bin holder (40) and a storage bin that is in the second bin holder (41). As will also be discussed below, the robot (22) can have a gripper that can pick up an asset from one of the storage bins and move it to the other storage bin.

Therefore, the AGV (100) shown in the drawings can beneficially retrieve storage bins from storage racks (10), transfer assets between storage bins, and then return the storage bins to the storage racks (10).

In this example, the bin transfer mechanism (42) includes a vertical actuator (24) for moving the cradle unit (14) vertically such that the first bin holder (40) can be aligned in a vertical dimension with storage racks at different heights. Therefore, the bin transfer mechanism (42) can locate the cradle unit (14) such that the first bin holder (40) is at the same height as a storage rack from which a storage bin is to be retrieved or at which a storage bin is to be replaced. The bin transfer mechanism (42) can then change the height of the cradle unit (14) (if required) such that the first bin holder (40) is at the same height as the second bin holder (41), and a storage bin can be moved between the first bin holder (40) and the second bin holder (41).

For the example that is illustrated in the drawings, the first bin holder (40) is movable up and down and rotatable about a vertical axis, but it is not movable in a horizontal plane. It is the extendable forks (17a) that can move a storage bin to or from the first bin holder (40) in a horizontal direction.

A further feature of the AGV (100) shown in the drawings is that it has one or more buffer bin holders (43). Three buffer bin holders (43) are shown in figure 2. Each buffer bin holder (43) in the drawing has an empty storage bin (19) located in it. It will be appreciated that, in the same way that is described above with reference to the first and second bin holders (40, 41), the buffer bin holders (43) can have any structure that is suitable for supporting a storage bin. The bin transfer mechanism (42) can transfer a storage bin between: i) the first bin holder (40); and ii) the one or more buffer bin holders (43).

The buffer bin holders (43) beneficially enable the AGV (100) to carry more than two storage bins at the same time. This can be beneficial if a selected storage bin is located in a storage rack behind another storage bin, in which case the AGV (100) can remove the storage bin that is not required and place it in a buffer bin holder (43), and then retrieve the selected storage bin. This can be referred to as providing double-deep capabilities. The buffer bin holders (43) can also be useful if the AGV is to transport more than two storage bins to a user access point in the ASRS (200). For example, a conveyor (not shown in the drawings) can be provided in a region of the storage rack column assembly (50). The AGV (100) can move storage bins from any of its bin holders, via the first bin holder (40) to the access point / conveyor such that they can be collected by a human operator. In this way, the human operator can be kept safe from the AGV (100) because they do not need to move in the same regions as the AGV (100).

In this example, the one or more buffer bin holders (43) are vertically offset from the second bin holder (41). The bin transfer mechanism (42) can move the cradle unit (14) vertically such that the first bin holder (40) can be aligned in a vertical dimension with either: i) the second bin holder (41); or ii) the one or more buffer bin holders (43).

The AGV (100) in this example also includes a controller (13). The controller (13) can operate the bin transfer mechanism (42) and the robot (22) in order to move a selected asset between a first selected storage bin that is in the first bin holder (40) and a second selected storage bin that is in the second bin holder (41), or *vice versa*, as discussed above. The controller (13) can also operate the bin transfer mechanism (42) and the robot (22) in order to move any storage bin between any of the bin holders / locations described herein.

The AGV (100) of this example also includes a navigation module, which is configured to determine a route through the ASRS (200) to a selected asset in a selected storage bin in a selected storage rack.

Beneficially, the controller (13) can apply an artificial intelligence algorithm in one or more of:
- identifying assets that are in a storage bin in the first bin holder;
- identifying assets that are in a storage bin in the second bin holder; and
- determining a route through the ASRS (200) in order to avoid obstacles in the ASRS (200).

We will now provide additional description of various of the features that are shown in the drawings.

The AGV comprises a controller (13) in communication with a navigation module (not shown), a fork mechanism (17), a cradle unit (14), a plurality of bin holders (341) and a robot (22).

The controller (13) is responsible for navigating the AGV (100) through indoor spaces by means of the navigation module, pick and place the assets (20) in storage bins (19) and pass the storage bin (19) to an output conveyor nearby. The navigation module is configured to operate the AGV (100) along predefined routes and possesses the capability to detect and circumvent obstacles in its path.

The navigation module includes a plurality of sensors, a plurality of driving wheels (16) and a navigation application module configured within the controller (13). The navigation application module incorporates predefined routes for mapping out the environment where the AGV may operate, and calibrates the plurality of sensors and associated circuits to detect and respond to obstacles and other conditions. This enables the AGV (100) to autonomously move from one location to another by means of the driving wheels (16). The driving wheels (16) enable the AGV (100) to execute precise movements, including forward and backward motion, as well as rotational adjustments. By controlling the speed and direction of these wheels, through the navigation application module, the AGV (100) can navigate through intricate pathways within indoor spaces with maximum accuracy.

In one of the exemplary embodiments of the present invention, the plurality of driving wheels (16) includes two powered differential driving wheels. In addition to the driving wheels (16), the navigation module further accommodates four caster wheels strategically positioned for stability and support for the AGV (100). These caster wheels play a crucial role in maintaining balance and maneuverability, ensuring smooth operation even when encountering uneven surfaces or obstacles along the predefined path. The combination of driving wheels and caster wheels with the support of the plurality of sensors coupled to the controller (13) empowers the AGV (100) to efficiently transport materials, such as assets, within a warehouse environment.

In one of the exemplary embodiments of the present invention, the plurality of sensors includes safety sensor (25) configured to detect obstacles within the path laid by the navigation application for the AGV (100). The navigation module is configured to create maps of the surrounding area as it moves through warehouse environment.

In one of the exemplary embodiments of the present invention, the safety sensor (25) is a Lidar-sensor module that holds certification for safety standards. This sensor utilizes Lidar technology, which emits laser beams and measures their reflections to create detailed maps of the surrounding area. By analyzing these maps in real-time by the controller, the navigation module can identify any potential obstacles in the AGV's trajectory.

In one of the exemplary embodiments of the present invention, the safety sensor (25) is configured to adapt its detection range based on the speed of the AGV (100). The sensor (25) adjusts its scanning capabilities as the AGV (100) accelerates or decelerates, this ensures sufficient time for the navigation module to react to any detected obstacles. In the event of obstacle detection, the safety sensor (25) provides timely information to the AGV's control system, prompting it to initiate appropriate actions such as deceleration or stopping. Additionally, the safety sensor (25) serves another crucial purpose by providing Lidar-based inputs to the navigation application module. These inputs include real-time data on the AGV's surroundings, such as the location and shape of obstacles, which enables the navigation software to plan optimal routes and make informed decisions to ensure safe and efficient navigation within the warehouse environment.

In one of the exemplary embodiments of the present invention, the controller (13) includes a plurality of programmable logic controllers (PLCs) and/or computers (PCs) that produce control instructions in response to the signals received from the plurality of sensors, the cradle unit (14), the fork mechanism (17), and a robot (22) connected thereto.

The cradle unit (14) includes a rotating mechanical structure configured on the vehicle frame structure (26). The cradle unit (14) is configured as a rotating module upon which a fork mechanism (17) is mounted. In a preferred embodiment, the cradle unit (14) is configured to rotate up to 270 degrees. This extensive range of motion enables the cradle to efficiently load and unload storage bins (19) from storage racks (10) situated on both the left and right sides of the AGV (100), as well as from buffer storage bin holder (43) areas located within the vehicle frame structure (26).

In one of the exemplary embodiments of the present invention, the cradle unit (14) is rotatably positioned atop a linear actuator (not shown).

In one of the exemplary embodiments of the present invention, the cradle unit (14) is mounted on a vertical actuator (24). The vertical actuator (24) is configured to move the cradle unit (14) up and down so that cradle unit has access to all the levels in the storage racks that holds at least one storage bin. These storage bins are loaded or unloaded by the fork mechanism (17) from the plurality of locations in the storage rack (10).

The fork mechanism (17) includes a telescopic fork (17a) equipped with fingers or prongs that securely grip the storage bins (19), facilitating their transportation to and from the storage racks (10), conveyors, bin holders (40, 41, 43), and robot stations.

In one of the exemplary embodiments of the present invention, the fork mechanism (17) is a telescopically extendable mechanism in communication with the controller (13) as shown in figure 3. The figure 3A illustrates the AGV (100) with the telescopically extendable fork (17a) in a retracted / closed position in accordance with the present invention. The figure 3B illustrates the AGV (100) with the telescopically extendable fork (17a) in an extended position in accordance with the present invention. The telescopic extending feature allowing it to reach storage bins (19) located at different distances from the AGV (100).

In an implementation of an embodiment, the telescopic range of expansion for fork mechanism (17) is set to 2 storage bins in length, and is capable of effectively accessing storage bins (19) positioned deeper within storage racks (10) or conveyor units. Thus, the telescopic fork (17a) extends or retracts when loading or unloading the storage bins (10). This ensures proper alignment with the target location. Once the storage bin (19) is positioned correctly, the fingers of the fork securely grasp the storage bin (19), providing a stable hold during transportation. This ensures safe and reliable transfer of materials / assets between storage locations and the cradle unit (14), minimizing the risk of damage or displacement during handling.

In one of the exemplary embodiments of the present invention, the cradle unit (14) is further incorporated with an image sensor and a code scanning unit. The code scanning unit is designed to read and interpret the location information encoded on both the storage rack (10) and the storage bin (19). The image sensor is a laser sensor strategically positioned in the cradle unit (14) to identify vacant spaces within the storage racks (10) prior to loading storage bins (19) onto them. Thus, AGV (100) ensures the unoccupancy of the designated storage location, preventing potential collisions and optimizing the placement of materials within the warehouse environment.

In one of the exemplary embodiments of the present invention, the code scanning unit includes a camera capable of scanning QR codes on both the storage rack (10) and the storage bin (19). This enables the AGV cradle unit (14) to establish a closed-loop operation by accurately identifying the destination for each material transfer task. Utilizing QR code technology, the AGV (100) ensures precise navigation and alignment with storage locations, thereby minimizing errors and enhancing operational efficiency. Therefore, the cradle unit (14) forms a critical element of the AGV's material handling capabilities by performing both linear and rotational movements. This facilitates the seamless loading and unloading of storage bins from various storage locations. The rotational flexibility, coupled with advanced sensor and scanning technologies, the cradle (14) facilitates precise and reliable material transfer operations, contributing to the overall efficiency and productivity of warehouse management systems.

In one of the exemplary embodiments of the present invention, the robot (22) includes a robotic arm (27), a processing unit, and an end effector powered by a battery unit. The processing unit is responsible for orchestrating the movements and actions thus, ensures seamless integration and coordination between the robot (22) and the AGV's navigation and controls. The robot (22) is mounted in an inverted position, as shown in figure 4A, on the vehicle frame structure (26) such that it can face a storage bin (19) that is located in the first bin holder (40) or the second bin holder (41).

The end effector comprises of a gripper (28) and a vision module. The gripper (28) is an electric jaw gripper with inbuilt force control capability to grab the assets (20) arranged within the bin. The end effector is mounted at the free end of the robot (22) that helps to pick and place the selected assets (20). This picking operation is force based grabbing and hence size variation in all the make and models of assets (20) are to be carefully considered. This is made by the vision module, that is configured to monitor the assets (20) in close proximity. When the asset (20) comes in contact with the jaws during its closure, a force is exerted on the jaw which is continuously monitored. As soon as the force reaches the predefined limit the picking operation is completed, and robotic arm (27) transfers the asset (20) from one place to another.

In one of the exemplary embodiments of the present invention, the gripper is an electric gripper as shown in figure 4B, comprises two jaws that may come closer while picking the assets (20). These jaws are configured to delicately pick up and precisely place assets (20) within the storage bins (19). This enables efficient handling of assets (20) such as mobile phones ensuring accuracy and reliability throughout the sorting process. Additionally, the vision module is configured to capture comprehensive images of whole storage bins and identify the unique identification codes (29) of each of the pouched assets (20). This integration of vision module enables the robot (22) to execute mobile transactions with complete closed-loop precision, ensuring seamless and error-free sorting operations.

The robot (100) is a collaborative robot (cobot) configured for sorting the assets (20) in the storage bin (19). In a preferred embodiment, robot (22) is configured for sorting the assets (20) such as mobile phones or tablets in the storage bin (19) by using robotic arm (27). The robotic arm (27) has 6 degrees of freedom and payload of 5 Kg with reach of 994mm. Positioned atop the AGV (100), the robot (22) seamlessly facilitates the transfer of assets (20) from one storage bin (19) to another, executing sorting operations based on predefined instructions by using the gripper (28) and the vision module in the end effector.

In one of the exemplary embodiments of the present invention, the vision module includes high Mega pixel camera, Lens and lighting system and an image processing module. The vision module is configured to detect the presence or absence of the asset (20) in the bin slot and the unique identification code (29) printed on the asset (20) by capturing snapshots of the storage bin (19). By capturing images of the storage bins (19) in the first and second bin holders (40, 41), the robot (22) automates and streamlines the reconciliation process.

In one of the exemplary embodiments of the present invention, the robotic arm (27) is controlled by the Fanuc Controller, powered from a battery. The robotic arm (27) supports multi directional movements thus provides improved AGV's material handling capabilities, enabling intelligent sorting operations and enhancing the efficiency of warehouse management systems.

In one of the exemplary embodiments of the present invention, the plurality of buffer bin holders (43) are firmly fitted on the vehicle frame structure (26), wherein each of the plurality of buffer bin holders is mechanically in communication with the cradle unit for receiving at least one storage bin thereon for the transfer of assets from one storage bin to another.

The buffer bin holders (43) are arranged vertically one below the other for receiving buffer storage bins fetched by the fork mechanism (17). The buffer storage bins are removably placed on the buffer bin holders (19) such that they can be placed or removed by the fork (17a). In a preferred embodiment, the AGV (100) includes three buffer bin holders (18) arranged vertically, that during operation, when unloading the interior buffer storage bin (19) in the 2^{nd} position in the buffer bin holder (43) in presence of exterior buffer storage bin (19) in first position, the cradle unit (14) and the fork mechanism (17) together works to unload the buffer storage bin in first position and place it on the buffer position and leave the fork (17a) free to unload the buffer storage bin in second position. When the situation comes to dispatch multiple buffer storage bins (19) to storage racks (10), the fork mechanism (17) unloads the buffer storage bins from the storage rack (10) and place them in the buffer area (i.e., the buffer bin holders (43)). When all buffer areas are filled, the navigation module directs AGV (10) towards the output conveyor and transfers all buffer storage bins (19) from the buffer holder bins (43) to the output conveyor. This optimizes the buffer areas and the AGV (100) movements.

In one of the exemplary embodiments of the present invention, the controller is configured with an artificial intelligence (AI) module that optimizes the path planning of the navigation module. The AI module is configured to produce commands and put into sequence to optimize the travel of the AGV by learning the pattern of fast-moving material and slow-moving material. That is, assets that are considered most likely to require transport soon are considered "fast-moving", and assets that are considered least likely to require transport soon are considered "slow-moving". The storage strategy is optimized to have fast retrieving capability.

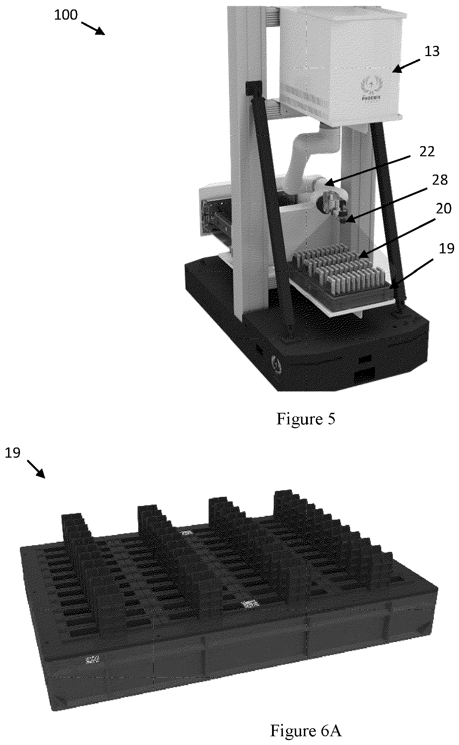

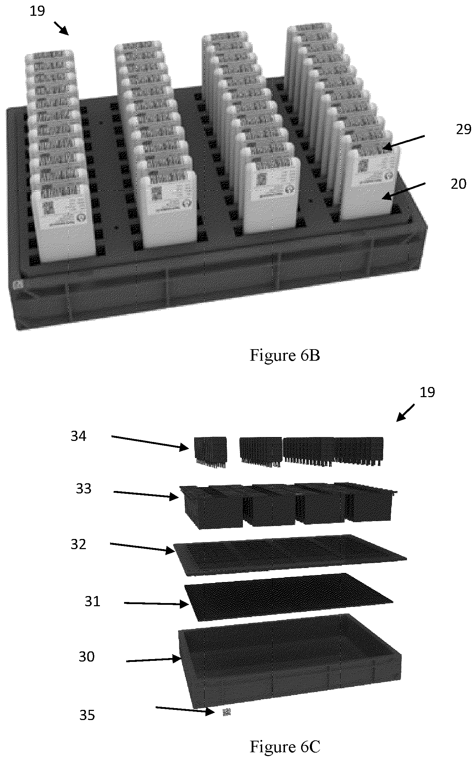

In one of the exemplary embodiments of the present invention, the storage bin (19) features a rectangular bin as shown in figure 6A & 6B. The storage bin (19) is configured with multiple compartments designed to accommodate assets (20) in pouched packets. Additionally, each pouched packet is labeled with a two-dimensional code representing a unique identification code (29) for the asset (20) therein. In a preferred embodiment, the unique identification for the stored assets (20) such as mobile phone is IMEI code of the device.

In one of the exemplary embodiments of the present invention, referring to the figure 6c, the storage bin (19) comprises a tray (30), a form sheet (31), a base plate (32), a plurality of pockets (33) and a plurality of separators (34). The plurality of pockets (33) is made with slots for receiving the mobile phones enclosed in a pouch.

In one of the exemplary embodiments of the present invention, each of the plurality of storage bins (19) is identified by a unique id labelled by a QR code (35) on the bin surface.

In one of the exemplary embodiments of the present invention, the unique identification code (29) is prominently displayed on the top portion of the pouch containing the respective asset (20) as shown in figure 6B. The assets are further serially arranged in a storage bin (19) carrying identification code (29) marked thereon. This code (29) serves as a distinctive marker for each of the assets (20) and the identification code (35) printed on the storage bin serves as a distinctive marker for each of the storage bin (19) corresponding to the set of assets (20) stored therein. To facilitate automated processing, a vision module integrated into the robot (22) is specifically configured to accurately read and interpret these codes. This ensures precise identification and handling of the assets (20) by the robot (22), streamlining inventory management and logistics processes.

In one of the exemplary embodiments of the present invention, the vision module is configured to capture snapshots of the entire storage bin (19) from directly above, as depicted in Figure 5, process the image and identify the assets in the storage bin (19) based on the unique identification code (29) printed on the pouch. This is facilitated by applying a plurality of image processing techniques on the captured images for identifying the empty pockets in the storage bin, presence of assets in the pockets and finally the asset (20) by recognizing the unique identification code (29).

The image processing technique performs image visualization, filtering of bounding boxes corresponding to the pockets in the storage bin (19), sorting of bounding boxes, identification of columns etc. on the captured images. During image visualization, the algorithm passes the bounding boxes having assets (20) as well as the two-dimensional identification codes (29) particularly the QR to PyzBar and appends their value to an array. In the implementation of the embodiment, these random bounding boxes are arranged based on the position in the storage bin (19) through a pixel-based algorithm. All these bounding boxes detected for the presence of the assets (20) are sent to a deep learning (DL) inferencing model in the AI module for the detection of the presence of the unique identification code (29). These detected unique identification codes (29) are further assigned to bounding box detected for the assets (20). This gives the position wise data in terms of empty pocket and filled pocket with unique identification codes (29). These data are mapped with the detected storages bin identification code (35). Further, the compiled data with storage bin identification code (35) is passed on to the controller. The controller performs tallying the physically present data to digital inventory data and generate the task for the robot (22) to sort the mobile phones. This makes close loop process of identification and sorting of assets (20).

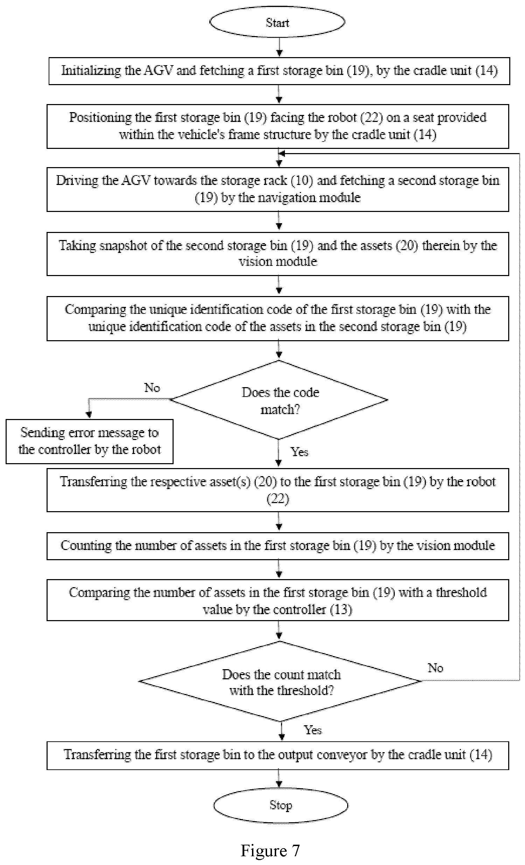

In another aspect of the present invention, a method of automated storage and retrieval of assets particularly mobile phones stored in a warehouse is disclosed in accordance with an implementation of the present invention. Referring to the figure 7, the method begins with initializing the AGV (100) and start fetching a first storage bin (19), by the cradle unit (14). The first storage bin (19) is an empty one, positioned facing the robot (22) on a seat provided within the vehicle frame structure (26). The AGV (100) further moves towards the storage rack (10) and allow the fork mechanism (17) in the cradle unit (14) to fetch a second storage bin (19) containing assets (20) therein. The robot (22) takes images of the storage bin (19) and the assets (20) therein and checks the unique identification code (29) for each asset (20) by means of vision module. If the identification codes (29,35) of the first storage bin (19) and any one of the assets (20) in the second storage bin (19) matches, the robot (22) picks that asset (20) in the second storage bin (19) and transfer it to the first storage bin (19). If the code does not match, the robot (22) sends an error message to the controller (13). The cradle unit (14) further place the second storage bin (19) back to the original position in the rack (10). The robot (22) further takes an image of the first storage bin (19) ensuring the number of assets (20) therein with the help of the vision module. The AGV (100) further continues to navigate to the storage rack (10) and pick storage bin containing assets (20) of required identification codes (35) and fill the first storage bin (19) with required assets (20). If the number of assets (20) in the first storage bin (19) meets a threshold value, the cradle unit (14) transfers the first storage bin (19) to an output conveyor and AGV (100) back to its initial position.

In another aspect of the present disclosure, a method for cycle count of storage bin (19) by the AVG (100) is disclosed in accordance with an implementation of the present invention. The method begins with the initialization of the AGV (100) and its movement between the storage racks (10). The cradle unit (14) further retrieves a storage bin from the rack (10) and brings it near to the robot (22) for the identification of the codes of the assets therein. The robot (22) scans by utilizing the vision module and read the identification codes (35) of the storage bin (19) and all the assets (20) therein. These extracted codes are further compared with a digital inventory and a report is passed to the controller (13) in case of any discrepancy found. Further, the storage bin (19) is transferred back to its original position in the storage rack (10) if the codes are matching. The steps repeat through for all the storage bins (19) in the racks (10) and finally update the inventory report by the controller (13).

The distinct advantages of the present invention include:
the comprehensive design of the AGV (100) with navigation module enables it to navigate through dynamically changing surroundings while maintaining reliability and precision in material transfer tasks.
The safety sensor (25) plays a vital role in enhancing the safety and reliability of AGV operations within warehouse environments. The advanced capabilities in obstacle detection and intelligent adaptation to the AGV's speed contribute to minimizing the risk of collisions and ensuring smooth and uninterrupted material transfer processes.
The telescopically expending fork mechanism (17) enables the AGV (100) to handle materials stored in double-deep configurations, optimizing storage space utilization and maximizing efficiency in material handling operations.
By incorporating a telescopic fork (17a) with double-deep capabilities, AGVs can streamline the process of retrieving and storing materials within the warehouse, contributing to overall efficiency and productivity. This versatility in material handling capabilities enhances the AGV's adaptability to various warehouse layouts and inventory management systems, ultimately optimizing throughput and minimizing downtime in material transfer operations.
The AGV (100) enhances operational efficiency by utilizing QR code technology for precise navigation and alignment with storage locations, minimizing errors.
The vision module incorporated with the robot (22) provides real-time visual data to enhance inventory management accuracy and efficiency.
Through the end effector and vision system, the robot (22) facilitates precise and automated pouched asset (20) particularly the mobile phone transactions, contributing to streamlined operations and enhanced productivity.

The foregoing descriptions of specific embodiments of the present invention have been presented for purposes of illustration and description. They are not intended to be exhaustive or to limit the present invention to the precise forms disclosed, and obviously many modifications and variations are possible in light of the above teaching. The embodiments were chosen and described in order to best explain the principles of the present invention and its practical application, to thereby enable others skilled in the art to best utilize the present invention and various embodiments with various modifications as are suited to the particular use contemplated. It is understood that various omission and substitutions of equivalents are contemplated as circumstance may suggest or render expedient, but such are intended to cover the application or implementation without departing from the scope of the present invention.

### List of components:

| Component Name | Component Number | Component Name | Component Number |
|---|---|---|---|
| Storage racks | 10 | Safety sensor | 25 |
| Structure assembly | 12 | Vehicle frame structure | 26 |
| Controller | 13 | Robotic arm | 27 |
| Cradle unit | 14 | Gripper | 28 |
| Driving wheels | 16 | Identification code of asset | 29 |
| Fork mechanism | 17 | Slot for the asset | 30 |
| | | Form sheet | 31 |
| Storage bin | 19 | Base plate | 32 |
| Asset | 20 | Pockets | 33 |
| | | Separators | 34 |
| Robot | 22 | QR code label on storage bin | 35 |
| End effector | 23 | first bin holder | 40 |
| | | second bin holder | 41 |
| | | bin transfer mechanism | 42 |
| | | buffer bin holder | 43 |
| | | Storage rack column assembly | 50 |
| Vertical actuator | 24 | Automated guided vehicle | 100 |

## Claims

1. An automated guided vehicle, AGV, (100) for moving around in an automated storage and retrieval system, ASRS, (200), wherein the ASRS includes a storage rack column assembly (50) that comprises a plurality of storage racks (10) for storing individual assets (20) in storage bins, the AGV (200) comprising:
a first bin holder (40), for receiving a storage bin;
a second bin holder (41), for receiving a storage bin;
a bin transfer mechanism (42), which is configured to: i) transfer a storage bin between a storage rack and the first bin holder (40); and ii) transfer a storage bin between the first bin holder (40) and the second bin holder (41), wherein the bin transfer mechanism comprises:
extendable forks (17a), which are movable between an extended configuration and a retracted configuration;
a cradle unit (14), which is configured to move the extendable forks (17a) between a first orientation and a second orientation, wherein:
when the extendable forks (17a) are in the first orientation, they are configured to move a storage bin between: i) the first bin holder (40) when the extendable forks are in the retracted configuration; and ii) a storage rack (10) when the extendable forks are in an extended configuration; and
when the extendable forks (17a) are in the second orientation, they are configured to move a storage bin between: i) the first bin holder (40) when the extendable forks are in the retracted configuration; and ii) the second bin holder (41) when the extendable forks are in the extended configuration; and
a robot (22) that is configured to:
identify assets that are in a storage bin in the first bin holder (40) and identify assets that are in a storage bin in the second bin holder (41); and
move assets between a storage bin that is in the first bin holder (40) and a storage bin that is in the second bin holder (41).

2. The AGV of claim 1, wherein the bin transfer mechanism is configured to move the cradle unit vertically such that the first bin holder can be aligned with storage racks at different heights.

3. The AGV of claim 1, further comprising one or more buffer bin holders, and wherein the bin transfer mechanism is further configured to transfer a storage bin between: i) the first bin holder; and ii) the one or more buffer bin holders.

4. The AGV of claim 3, wherein the one or more buffer bin holders are vertically offset from the second bin holder.

5. The AGV of claim 4, wherein the bin transfer mechanism is configured to move the cradle unit vertically such that the first bin holder can be aligned with either: i) the second bin holder; or ii) the one or more buffer bin holders.

6. The AGV of claim 1, further comprising a navigation module, which is configured to determine a route through the ASRS (200) to a selected asset in a selected storage bin in a selected storage rack.

7. The AGV of claim 6, wherein the navigation module is configured to apply an artificial intelligence algorithm in determining the route through the ASRS (200) in order to avoid obstacles in the ASRS (200).

8. The AGV of claim 1, further comprising a controller that is configured to operate the bin transfer mechanism and the robot in order to move a selected asset between a first selected storage bin that is in the first bin holder and a second selected storage bin that is in the second bin holder.

9. The AGV of claim 8, wherein the controller is configured to apply an artificial intelligence algorithm in one or more of:
identifying assets that are in a storage bin in the first bin holder; and
identifying assets that are in a storage bin in the second bin holder.

10. The AGV of claim 1, wherein the bin transfer mechanism is configured to rotate the extendable forks between: the first orientation, in which the extendable forks are configured to extend in a direction that is transverse to a longitudinal dimension of the AGV; and the second orientation, in which the extendable forks are configured to extend in a direction that is substantially parallel to the longitudinal dimension of the AGV.

11. The AGV of claim 1, wherein: the first bin holder and the second bin holder are offset from each other in a direction that is parallel to a longitudinal dimension of the AGV.

12. The AGV (100) of claim 1, wherein the extendable forks are telescopic.
